# EUROPEAN PATENT APPLICATION

(11) **EP 0 971 107 A2**
(43) Date of publication of application: **12.01.2000**
(21) Application number: 99305396.6
(22) Date of filing: 07.07.1999
(51) Int. Cl.: F02B 19/02

(54) **Prechamber gas-combustion engine**

(30) Priority: 08.07.1998 JP 19334298
(71) Applicant: ISUZU CERAMICS RESEARCH INSTITUTE CO., LTD., Fujisawa-shi, Kanagawa-ken (JP)
(72) Inventor: Kawamura, Hideo, Kouza-gun, Kanagawa-ken 253-0105 (JP); Higashino, Akira, Hoshi no Oka View City, Yokohama-shi, Kanagawa-ken 240-0044 (JP)
(74) Representative: Jenkins, Peter David

(57) **Abstract**

A prechamber gas-combustion engine is disclosed in which no residual unburned gaseous fuel is left in auxiliary chambers(2) to ensure the thermal efficiency. The control valves(5) are each arranged in connecting ports(6) between main and auxiliary chambers(1,2) and extend through an axial central area of the associated auxiliary formed in an inverted frustum of cone. The control valves(5) each have an air passage(7) opened to the main chamber(1) and air-discharge orifices(16) to be opened to an upper area in the auxiliary chamber(2). Arranged in the air passage(7) is a slide valve(8) to open the air-discharge orifices(16) to upper area of the auxiliary chamber(2) when subjected to an air pressure above a preselected pressure in the main chamber(1). The control valve(5) opens the air-discharge orifices(16) late in the compression stroke, so that the compressed air is allowed to issue into the upper area in the auxiliary chamber(2). The compressed air flows against the conical surface(21) in the auxiliary chamber(2), then reflects upwards, filling the auxiliary chamber(2) from above thereby pressing down the gaseous fuel to the lower area in the auxiliary chamber(2), where combustion takes place.

## Description

The present invention relates to a gas-combustion engine provided with precombustion chambers that are communicated with each other through connecting ports having therein control valves for opening and closing the connecting ports, whereby the injected gaseous fuel ignites and burns in the auxiliary chambers, and the subsequent flames accompanied with any unburned gaseous fuel then issues into the main chambers through the connecting ports opened.

Disclosed in Japanese Patent Laid-Open No. 310550/1995 is an example of prior gas-combustion engines, in which a gaseous fuel such as natural gas or the like is introduced into an auxiliary chamber while an intake air is compressed only in a main chamber to a high compression ratio. The cylinder pressure in each auxiliary chamber is monitored with a pressure sensor using piezoelectric elements and a fuel-supply valve is actuated in accordance with the information reported from the pressure sensor to thereby control the quantity of the fuel to be supplied in compliance with the engine rpm and the engine load. The air heated to high temperature by compression in the main chamber is admitted into the associated auxiliary chamber through the connecting small passageway whereby the gaseous fuel in the auxiliary chamber is mixed almost instantaneously with the admitted high-pressure air to promote rapid combustion. Namely, combustion begins in the richer mixture in the auxiliary chamber, or the prechamber, thereby restraining the generation of NOx emissions. The burning mixture then enters the main chamber, where the secondary combustion is completed within a short burning time to ensure the high thermal efficiency with less generation of NOx, HC and the like.

The gas-combustion engine has the control valves each located at a nearly central position of the cylinder to open and close the associated passageway communicating the auxiliary chamber with the main chamber. The control valve closes the associated passageway during a piston is moving to intake air in the main chamber while a gaseous fuel-supply valve is open to allow the gaseous fuel entering the auxiliary chamber. The control valve opens the connecting passageway late in the compression stroke to permit the compressed air in the main chamber entering into the auxiliary chamber through the connecting passageway, thereby mixing with the gaseous fuel in the auxiliary chamber, where the mixture starts to burn. Flames of burning mixture entraining unburned mixture issue into the main chamber, where the secondary combustion is completed.

In the prechamber gas-combustion engines having the combustion chambers of heat-insulating structure, nevertheless, as the walls of the combustion chambers are too hot in temperature, the gaseous fuel sprayed into the auxiliary chambers is also heated to a high temperature making the fuel easier to ignite or fire. In addition, the compressed air introduced into the auxiliary chambers is hard to get mixed with the gaseous fuel because they are different in specific gravity from one another and, therefore, the combustion is apt to begin nearby the connecting passageway almost instantly the control valve opens the connecting passageway. The consequent combustion pressure propagates towards the depths of the main and auxiliary chambers whereby the gaseous fuel filled in the auxiliary chambers becomes increasingly confined in the depths of the auxiliary chambers. This results in the major problem of trapping the unburned mixture in the auxiliary chambers, deteriorating the combustion conditions and thus lowering the thermal efficiency with increase of the unburned hydrocarbons (HC).

Now investigating the mixing of gaseous fuel in air in the auxiliary chamber from the viewpoint of their physical properties, the natural gas is chiefly composed of CH₄ having the molecular weight of 16, whereas air has the molecular weight of 29. With the compressed air being injected into the auxiliary chamber at the instant the connecting passageway is opened, the air compressed up to the pressure of from 40 to 50 bars is forced into the auxiliary chamber, where the air expands rapidly to fill inside the auxiliary chamber. Owing to this, the phenomenon may happen such that any gaseous fuel does not get mixed with the air, but confined within an inner part, or the upper area, of the auxiliary chamber.

As an alternative, it may be considered to make large a ratio of the volume in the auxiliary chamber to the total volume of the main chamber at the end of the compression stroke to thereby permit more air entering into the auxiliary chamber. However, this causes excessively increasing the pressure in the main chamber before opening the connecting passageway and the control valve thus requires the great effort to lift off the connecting passageway, which might not be overcome by the commonly used lift mechanism.

Accordingly it is expected to develop an improved prechamber gas-combustion engine in which the compressed air jetting into the auxiliary chambers past the connecting passageways may get mixed homogeneously with the gaseous fuel charged into the auxiliary chambers whereby the gases of flames owing to the combustion initiated in the auxiliary and unburned mixture blow into the main chambers with no gaseous fuel remaining in the auxiliary chambers at the early stage of combustion, thereby resulting in improving the thermal efficiency with less emission of HC or the like.

The present invention has for its primary aim to overcome the problems as described above in terms that the natural gases are hard to get mixed with the air, and to provide a prechamber gas-combustion engine in which the burning mixture entraining any unburned mixture blows together with air out of the auxiliary chambers into the main chambers by the action of explosion pressure, which is caused by partial combustion occurring at a boundary area of the air with the fuel charged into the auxiliary chamber, thereby promoting combustion in the main chambers. The present invention more particularly provides a prechamber gas-combustion engine in which a control valve is installed in a connecting passageway communicating between an auxiliary chamber and a main chamber, the control valve having a valve stem formed therein with an air passage and an air nozzle, a slide valve is arranged in the air passage for operating late in the compression stroke under a pressure above a preselected pressure, thereby opening the air nozzle, through which the compressed air is admitted from the main chamber into the auxiliary chamber, where the compressed air presses the gaseous fuel downwards to bottom of the auxiliary chamber and then the burning mixture issues out of the auxiliary chamber to the main chamber through connecting passageway opened, whereby no residual unburned gaseous fuel is trapped in the auxiliary chamber with the result of high thermal efficiency with less emission of HC, NOx, soot and the like.

The present invention is concerned with a prechamber gas-combustion engine comprising combustion chamber members arranged in a cylinder head and formed with auxiliary chambers, pistons movable reciprocally in cylinders formed in a cylinder block mounted to the cylinder head, main chambers formed in the pistons, connecting ports formed in the combustion chamber members to communicate the auxiliary chambers with the main chambers, control valves each arranged extending a central area of the associated auxiliary chamber to open and close the associated connecting port, and gaseous fuel-supply means for applying a gaseous fuel to the auxiliary chambers, the control valves each having a valve stem bored with an air passage that is opened at its end exposed to the associated main chamber and provided with air-discharge orifices to open the air passage to an upper area in the associated auxiliary chamber, and a slide valve arranged in the air passage in the valve stem.

In one aspect of the present invention, especially, a prechamber gas-combustion engine is provided wherein the auxiliary chambers each are of an inverted frustum of circular cone, in which a surrounding wall of the auxiliary chamber is formed in an inverted conical configuration having an upper area larger in diameter than an lower area nearby the connecting port.

In another aspect of the present invention, a prechamber gas-combustion engine is provided wherein an air issuing into the auxiliary chambers past the air passages and air-discharge orifices from the main chambers flows against the inverted conical walls in the auxiliary chambers, reflecting upwards to the upper areas, and then turns to the lower areas of the auxiliary chambers, whereby the gaseous fuel in the auxiliary chambers is pushed down to the lower areas of the auxiliary chambers.

In another aspect of the present invention, a prechamber gas-combustion engine is provided wherein the slide valves each are urged under an elastic force of a spring in the air passage in the associated valve stem to the closure of the associated air-discharge orifices and operated to open the air-discharge orifices against the elastic force of the spring when subjected to an air pressure above a preselected pressure in the main chamber.

In another aspect of the present invention, a prechamber gas-combustion engine is provided wherein the air passages are each shaped like funnel wide at a mouth nearby the main chamber for easy, smooth admission of compressed air into the air passage from the main chamber.

In another aspect of the present invention, a prechamber gas-combustion engine is provided wherein, the instant the control valves each open the associated connecting port, most burning gaseous fuel compressively confined in the lower area of the auxiliary chamber issues into the main chamber.

In another aspect of the present invention, a prechamber gas-combustion engine is provided wherein the main chambers provided in the pistons are each formed in a reentrant configuration in which an opening thereof is narrowed with a tapered lip and an inner side wall thereof is designed to be continued with a jet-stream guide surface around an egress area of the connecting port at top dead center of piston.

In a further another aspect of the present invention, a prechamber gas-combustion engine is provided wherein, as the control valves open the connecting ports, gases of flames and any unburned gaseous fuel issue along the jet-stream guide surfaces into the reentrant main chambers, where the gases collide against the inner side walls, thereby diverging and staying transitorily, during which combustion is promoted.

In another aspect of the present invention, a prechamber gas-combustion engine is provided wherein the valve stems are each made thicker in diameter at an area where the air-discharge orifices are formed, compared with the remaining area of the valve stem, thereby making leads for the orifices long, in order to render a great penetration to the air introduced into the auxiliary chambers out of the air-discharge orifices past the air passages.

In another aspect of the present invention, a prechamber gas-combustion engine is provided wherein the valve stems each have the air-discharge orifices that are positioned at circumferentially regular intervals thereby making it possible to introduce uniformly the compressed air from the main chamber into the auxiliary chamber, and the air issued into the auxiliary chamber flows against the inverted conical surface of the auxiliary chamber, reflecting upwards to the upper area of the auxiliary chamber.

In an additional aspect of the present invention, a prechamber gas-combustion engine is provided wherein near top dead center of the compression stroke, the compressed air in the main chambers lifts the slide valves to thereby open the air-discharge orifices against the elastic forces of the springs, issuing uniformly into the upper areas in the auxiliary chambers past the air passages 7 and the air-discharge orifices, thereby getting mixed with the gaseous fuel in the auxiliary chambers, where the combustion takes place, then, the control valves open the connecting ports, through which the burning gases entraining any remaining unburned gaseous fuel issues into the main chambers into the main chambers.

In another aspect of the present invention, a prechamber gas-combustion engine is provided which includes air intake ports extending through the cylinder head and the combustion chamber members and installing therein intake valves, and exhaust ports extending through the cylinder head and the combustion chamber members and installing therein exhaust valves.

In accordance with the prechamber gas-combustion engine as constructed as described above, when the air A in the main chambers is intensified in pressure above a preselected pressure level late in the compression stroke, the slide valve lifts under the compressed air pressure in the main chamber against the elastic force of the spring thereby opening the air-discharge orifices, through which the compressed air in the main chamber enters the upper area, or the depth, of the auxiliary chamber, where the compressed air is mixed with the gaseous fuel. In the auxiliary chamber formed in the inverted frustum of cone, alternatively, the compressed air issued into the auxiliary chamber flows against the inverted conical wall surface of the auxiliary chamber, reflecting upwards, whereby the gaseous fuel is forced down along the inverted conical wall surface to the lower area nearby the connection port in the auxiliary chamber 2. The gaseous fuel starts to burn at the boundary area with the compressed air issuing into the auxiliary chamber through the air-discharge orifices. As it burns explosively, high pressure is created in the auxiliary chamber, which pushes the control valve downward to open the connecting port, through which the gaseous fuel in the auxiliary chamber issues into the reentrant main chamber with no residual gaseous fuel left in the auxiliary chamber. The swirl of the intake air present in the main chamber promotes more rapid mixing of the fresh air with gases including flames and unburned gaseous fuel. This accelerates the secondary combustion in the main chamber so that the combustion may be completed within a short burning time.

In consequence, the prechamber gas-combustion engine of the present invention helps prevent any unburned gaseous fuel from remaining in the auxiliary chamber to thereby ensure the high thermal efficiency with less generation of NOx, HC, soot and the like.

In the prior art, the gaseous fuel has been hard to get mixed with the compressed air in the auxiliary chamber, nevertheless, the air admitted in the cylinder is 9 to 9.5 times in volume as large as the gaseous fuel. In view of the above, the inventors has developed an improved prechamber gas-combustion engine in which combustion takes place at the boundary area of the fuel with the air in the auxiliary chamber and the consequent burning mixture accompanied with any unburned gaseous fuel issues into the main chamber, where rapid mixing takes place to promote efficient burning of the fuel. In marked contrast with the prior art, the prechamber gas-combustion engine of the present invention may prevent any unburned gaseous fuel from being trapped on the wall surface of the auxiliary chamber and thus left in the auxiliary chamber, which might otherwise happen in the conventional types of the prechamber gas-combustion engine.

Other aims and features of the present invention will be more apparent to those skilled in the art on consideration of the accompanying drawings and following specification wherein are disclosed preferred embodiments of the invention with the understanding that such variations, modifications and elimination of parts may be made therein as fall within the scope of the appended claims without departing from the scope of the invention.

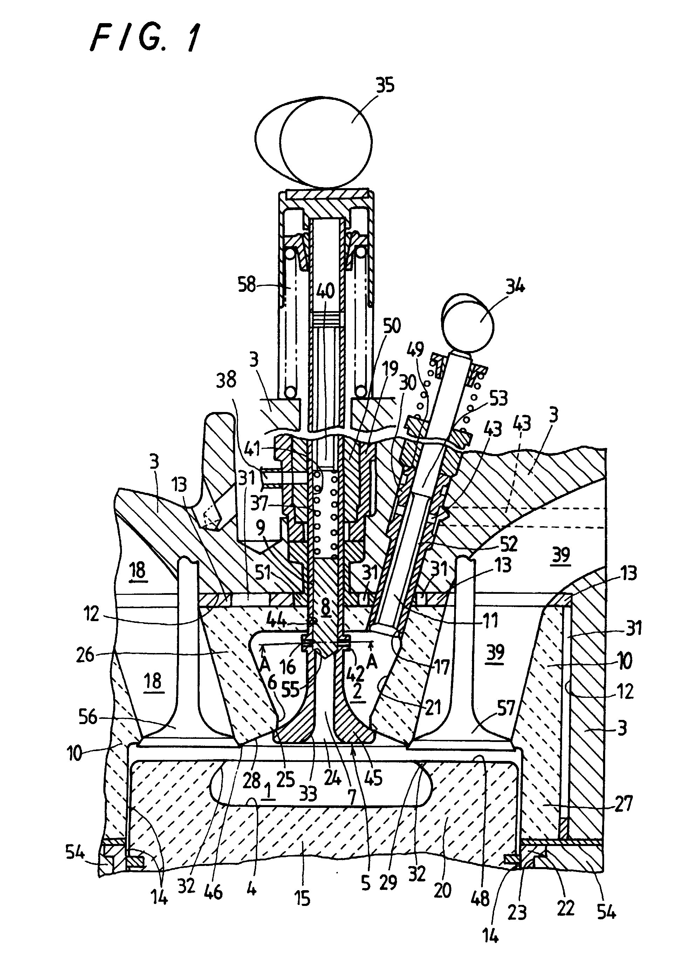

Embodiments of the present invention will now be described by way of example only, with reference to the accompanying drawings, in which:-
FIG. 1 is a fragmentary sectional view showing a preferred embodiment of a prechamber gas-combustion engine according to the present invention:
FIG. 2 is a cross-sectioned view illustrating an auxiliary chamber and air-discharge orifices formed in a control valve of the prechamber gas-combustion engine shown in FIG. 1, the view being taken on the plane of the line A-A of FIG.1:
FIG. 3 is an enlarged fragmentary section view of the prechamber gas-combustion engine in FIG. 1, and in which the compressed air is shown sprayed out of a slide valve into an upper area of the auxiliary chamber:
FIG. 4 is an enlarged fragmentary section view of the prechamber gas-combustion engine in FIG. 1, and in which the control valve opens its associated communicating port to allow gaseous fuel get mixed with air:
FIG. 5 is an enlarged fragmentary sectioned view showing another embodiment of a prechamber gas-combustion engine with the control valve in accordance with the present invention:
FIG. 6 is an enlarged fragmentary section illustrating a phase in which the compressed air is charged out of the slide valve into the deep area of the auxiliary chamber in the prechamber gas-combustion engine shown in FIG. 5: and
FIG. 7 is a schematic fragmentary section of the prechamber gas-combustion engine of FIG. 5, and in which the control valve opens the connecting port while the slide valve closes the air-discharge orifices.

The prechamber gas-combustion engine according to the present invention will be in detail explained below with reference to the accompanying drawings. The prechamber gas-combustion engine of the present invention may be adapted for, for example, cogeneration systems and automobiles.

The prechamber gas-combustion engine is comprised of a cylinder block 54, a cylinder head 3 mounted on the cylinder block 54, cylinder liners 22 snugly fitted in holes 23 formed in the cylinder block 54 so as to provide cylinders 14, combustion chamber walls 10 arranged in recesses 12 formed in the cylinder head 3, and pistons movable reciprocally in the cylinders 14 defined by the cylinder liners 22. The combustion chamber wall 10 is of a cylinder head liner that is composed of a head lower portion 26 and a liner upper portion 27 integral with the head lower portion 26. The combustion chamber wall 10 has an auxiliary chamber 2 in alignment with the center of the cylinder 14, while the piston 15 is formed at the center thereof with a cavity 4 forming a main chamber 1 of reentrant type.

The main and auxiliary chambers 1, 2 are communicated with each other through a connecting port 6 that is formed in the combustion chamber wall 10. The head lower portion 26 in the combustion chamber wall 10 is formed therein with an intake port 18 having a valve seat for an intake valve 57 and an exhaust port 39 having a valve seat for an exhaust valve 57. The cylinder head 3 is also formed with an intake port 18 and an exhaust port 39, which are connected to the intake port 18 and the exhaust port 39 in the combustion chamber wall 10, respectively.

The connecting port 6 formed in the combustion chamber wall 10 is provided with a valve seat 25 against which a control valve 5 moves off and reseat thereby opening and closing the connecting port 6. The control valve 5 is composed of a valve head arranged in alignment with the center of the cylinder 14, and a valve stem 9 integral with the valve head 45 and arranged for linearly reciprocating motion in a guide member 50 received in a valve supporter 19. The valve head 45 of the control valve 5 is extended through a central hole 44 in the combustion chamber wall 10 and disposed extending along a central axis of the auxiliary chamber 2. The control valve 5 is arranged for sliding movement in the guide member 50, which is inserted through the central hole 44 in the cylinder head 3. In order to prevent gases in the auxiliary chamber 2 from leakage, which might result from the sliding movement of the control valve 5, a sealing member 51 is arranged around the valve stem 9 of the control valve 5 at a thermal-isolating air space 31 of a clearance, which is defined between the upper surface of the combustion chamber wall 10 and the bottom surface of the cylinder head 3.

The combustion chamber wall 10 is formed from heat resisting material such as heat resisting alloys and ceramics of Si₃N₄ or the like. The combustion chamber wall 10 is arranged within the associated recess 12 in the cylinder head 3 through a gasket 13 so as to provide a heat-isolating air space 31 between the confronting surfaces of the recess 12 and the combustion chamber wall 10 whereby the main and auxiliary chambers 1, 2 are both formed in the heat isolating structure. The combustion chamber wall 10 is moreover provided with a fuel-supply means 11, or a fuel valve or a fuel-supply nozzle, which extends through the cylinder head, to charge a gaseous fuel G to the auxiliary chamber 2. The fuel valve 11 is fixed to the cylinder head 3 by mounting its valve casing 30 in a bore 49 formed in the cylinder head 3. The fuel valve 11 is to open a fuel-discharge port 17 communicating with a fuel passage 52 in the valve casing 30, thereby spraying the gaseous fuel G into the auxiliary chamber 2. The fuel passage 52 in the vale casing 30 is applied with the gaseous fuel through a fuel passage 43 formed in the cylinder head 3.

The piston 15 is composed of a piston head 20 of heat-resisting material such as heat-resisting alloys or ceramics of Si₃N₄ and the like, and a piston skirt of metals such as aluminum alloy secured to the piston head 20. A heat-isolating air space is defined between the piston head 20 and the piston skirt through, for example, a gasket. The piston head 20 and the piston skirt are combined with each other by means of a coupling ring. The main chamber 1 is chiefly comprised of the reentrant cavity 4 that is edged with an overhanging lip 29 on a piston crown 48 of the piston head 20, and a cylinder-piston combustion chamber in the cylinder 14, which is defined by a lower surface 46 of the head lower portion 26 of the combustion chamber wall 10 and the piston crown 48 of the piston head 20.

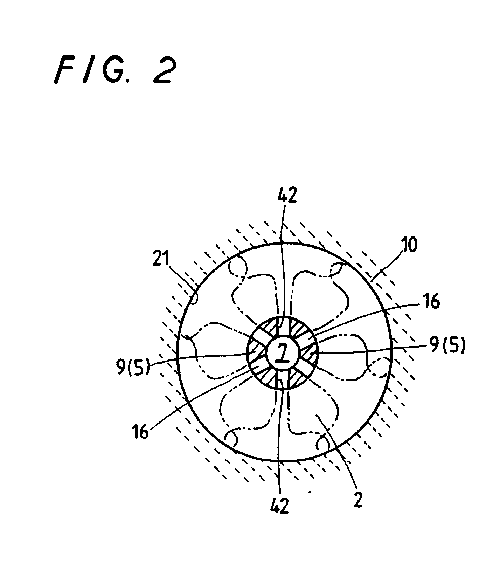

The prechamber gas-combustion engine includes an air passage 7 formed in the valve stem 9 of the control valve 5 so as to open to the main chamber 1, air-discharge orifices 16 formed in the valve stem 9 of the control valve 5 so as to open the air passage 7 to the upper area of the auxiliary chamber 2, and a slide valve 8 arranged in the valve stem 9 of the control valve 5 to open and close the air-discharge orifices 16. In the prechamber gas-combustion engine of the present invention, especially, the auxiliary chamber 2 is of an inverted frustum of circular cone, in which the upper area is made larger in diameter, compared with the lower area narrowed down nearby the connecting port 6. Namely, the auxiliary chamber 2 has a wall surface 21 of inverted circular cone. Moreover, the air-discharge orifices 16, six orifices in FIG. 2, are positioned at regular intervals around the axis of the cone and extended radially outwardly of the cone with a sufficient length of lead.

The slide valve 8 is arranged in the air passage 7 for sliding movement and may seat against an annular stepped portion 55 in the air passage 7 to close the air-discharge orifices 16. The slide valve 8 is urged against the annular stepped portion 55 by the elastic action of a spring 37 accommodated in an axial hole 41 in the valve stem 9. The spring 37 is held at a preselected position by a valve seat member 40 fixed in the axial hole 41 in the valve stem 9. It will be thus understood that the slide valve 8 is urged under the elastic force of the spring 37 in valve stem 9 to block off the air-discharge orifices 16 from the air passage 7 and, in contrast, is moved against the elastic force of the spring 37 by an air pressure above a preselected pressure in the main chamber 1 to open the air-discharge orifices 16. When the slide valve 8 opens the air-discharge orifices 16 at the upper portion of the auxiliary chamber 2, most air A introduced in the auxiliary chamber 2 from the main chamber 1 is charged dispersively into the upper area of the auxiliary chamber 2, where the gaseous fuel G is depressed compressively down to the lower area of the auxiliary chamber 2 by the dispersed air A.

For easy, smooth admission of compressed air A into the air passage 7 from the main chamber 1, the air passage 7 formed in the valve stem 9 of the control valve 5 is shaped like funnel wide at the mouth 33 nearby the main chamber 1. The instant the control valve 5 opens the connecting port 6, the compressed air A is admitted from the main chamber 1 into the auxiliary chamber 2, where the gaseous fuel G depressed compressively to the lower area in the auxiliary chamber 2 ignites and burn, whereby most gaseous fuel G issues into the main chamber 1.

According to the prechamber gas-combustion engine of the present invention, the piston 15 is provided at the piston head thereof with the reentrant main chamber 1 that is open at the piston crown 48, where the opening is narrowed with the tapered annular lip 29. An inner side wall 32 of the main chamber 1 is designed to be continued with a jet-stream guide surface 28 in the connecting port 6 at top dead center of piston. The instant the control valve 5 opens the connecting port 6, combustion gases accompanied with the gaseous fuel G jets out along the jet-stream guide surface 28 into the reentrant main chamber 1, where the combustion gases with any unburned gaseous fuel collide against the wall of the main chamber 1 and diverge in such a manner as being confined in the main chamber 1 to promote rapid mixing of the discharged gases with air and the consequent combustion.

The air-discharge orifices 16 formed in the valve stem 9 of the control valve 5 is to allow the compressed air R in the main chamber 1 for uniform blowing in the auxiliary chamber 2. The slide valve 8 is urged towards the stepped portion 55 by the elastic force of the spring 37 such that the distal end of the slide valve 8 makes an abutment against the stepped portion 55 to close the air-discharge orifices 16 as long as the compressed air pressure in the main chamber 1 is below a preselected pressure level. In the late compression stroke where the compressed air pressure in the main chamber 1 becomes over the preselected pressure, the compressed air pressure causes the slide valve 8 to lift off the stepped portion 55 against the elastic force of the spring 37 to thereby open the air passage 7 to the air-discharge orifices 16 through which the compressed air A in the main chamber 1 may be applied to the auxiliary chamber 2. In order to render a great penetration to the compressed air A introduced into the auxiliary chamber 2 out of the air-discharge orifices 16 past the air passage 7 in the valve stem 9 of the control valve 5, the valve stem 9 is made thicker in diameter at the area where the air-discharge orifices 16 are formed, compared with the remaining area of the valve stem 9, thereby making the lead 42 for the orifices 16 long.

The air-discharge orifices 16 in the valve stem 9 of the control valve 5 are positioned at regular intervals around the valve stem 9 thereby making it possible to issue uniformly the compressed air A from the main chamber 1 into the auxiliary chamber 2. The compressed air issued into the auxiliary chamber 2 flows against the inverted conical surface of the auxiliary chamber 2, reflecting upwards, and then flows divergently from the upper area to lower area of the auxiliary chamber 2. As the compressed air is charged into the upper area of the auxiliary chamber 2, the gaseous fuel is pushed down to the lower area of the auxiliary chamber 2.

For charging the compressed air A from the main chamber 1 into the auxiliary chamber 2, it is preferable that the total opening area of the air-discharge orifices 16 is substantially equal with the cross sectional area of the air passage 7 and about 0.4 to 0.9% of the area of the piston crown 48. The auxiliary chamber 2 is filled with the gaseous fuel G such as natural gas at a pressure of about 0.5 to 0.7 MPa. On the other hand, the slide valve 8 is kept at its closure position by the elastic action of the spring 37 having a spring force preset such that, when the compressed air pressure in the main chamber 1 reaches about 2 to 3 MPa, the slide valve 8 opens the air-discharge orifices 16 to allow the compressed air for entering into the gaseous fuel G. Both the control valve 5 and the slide valve 8 are made of ceramics such as SiC, Si₃N₄ and composite materials thereof, or heat-resisting alloys such as INCONEL (Ni-Cr-Fe alloy), which are heat resistant and hard to deform, so that the valves are sufficient in mechanical strength and free from fear of breakage.

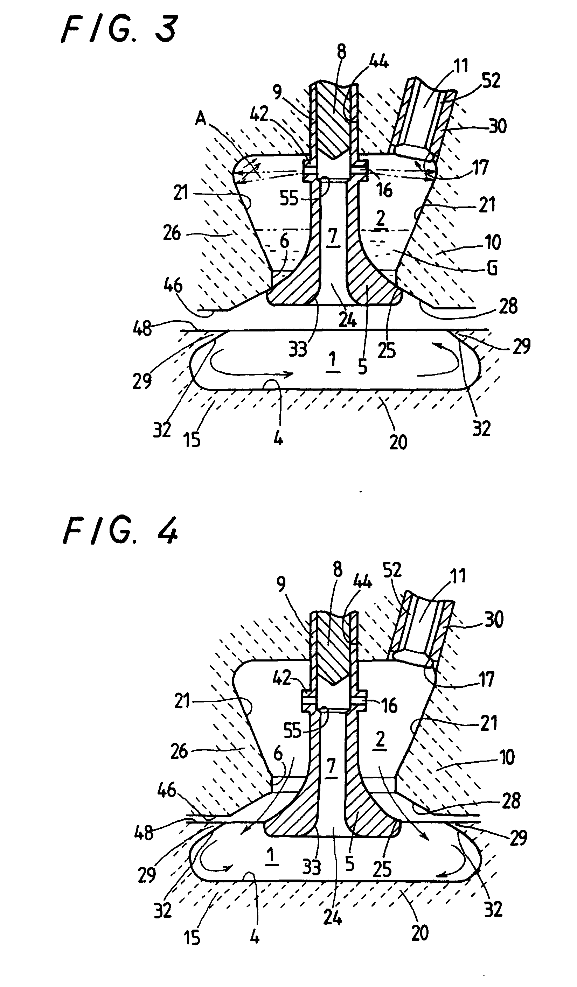

The slide valve 8 is forced by the elastic action of the spring 37 to its home position where the air-discharge orifices 16 are closed. The slide valve 8 may open the air-discharge orifices 16 at the instant its distal end is applied with an air pressure above a preselected pressure level through the air passage 7, which communicates to the main chamber 1 via a flaring ingress 24 at the funnel-like mouth 33. As the slide valve 8, as shown in FIG. 3, lifts late in the compression stroke by the compressed air pressure in the main chamber 1 against the elastic force of the spring 37 thereby opening the air-discharge orifices 16, the compressed air A in the main chamber 1 enters the upper area in the auxiliary chamber 2 in a uniformly divergent manner past the air passage 7 and the air-discharge orifices 16, thereby biasing the gaseous fuel G in the auxiliary chamber 2 towards the lower area of the auxiliary chamber 2 near the connecting port 6. As a result of the gradual increase of the pressure in the auxiliary chamber 2 up to about 5 MPa at which the air is heated by compressed pressure up to a temperature higher than the "auto-ignition" temperature of the fuel, the combustion takes place at a boundary area between the gaseous fuel G and the compressed air A. Following the initiation of combustion in the auxiliary chamber 2, the pressure increasing in the auxiliary chamber 2 by burning the fuel causes the control valve 5 to move downwards so as to open the connecting port 6 through which any unburned gaseous fuel remaining in the lower area of the auxiliary chamber 2 issues into the main chamber 1.

The cavity 4 formed in the piston head 20 is designed such that the wall surface 32 thereof is in line with the production of a guide wall, converging on the connecting port 6, at top dead center of piston. The cavity 4 for the main chamber 1 produces a swirl S in the intake air drawn into the main chamber 1 through the air intake port 18. The swirl S in the intake air causes a divergent air flow in the main chamber 1 to thereby promote more rapid mixing of the air with gases including flames and unburned mixture, which issue into the main chamber 1, trapping no residual gaseous fuel in the auxiliary chamber, through the connecting port 6 opened when the control valve 5 moves off as shown in FIG. 4. This accelerates the secondary combustion in the main chamber 1 so that the combustion may be completed within a short burning time to ensure the high thermal efficiency with less generation of NOx, HC, soot and the like.

The prechamber gas-combustion engine constructed as described above will operates as follow.

The prechamber gas-combustion engine operates on four-stroke-cycle wherein the phases of intake, compression, expansion and exhaust occur sequentially. On intake stroke the piston 15 is moving downward in the cylinder 14, the intake valve 56 has been opened with the exhaust valve 57 kept closed. Moreover, the control valve 5 closes the connecting port 6 while the slide valve 8 shuts off the air-discharge orifices 16 so that the main chamber 1 is isolated from the auxiliary chamber 2. Then, the intake air A is admitted in the main chamber 1 from a compressor or the like of a turbocharger through the intake ports 18. On the other hand, the gaseous fuel G of natural gas is fed to the gaseous fuel valve 11 past the gaseous fuel passage 43. The instant the valve body 53 lifts off to open the gaseous fuel-discharge port 17, the compressed gaseous fuel is allowed to enter into the auxiliary chamber 2. Following the delivery of a metered amount of gaseous fuel G into the auxiliary chamber 2, the gaseous fuel valve 11 blocks the gaseous fuel-discharge port 17 while the air intake valve 56 closes the air intake port 18.

On compression strake, the piston 15 is moving upward in the cylinder 14, compressing the drawn air A in the main chamber 1. In the late compression stroke, the instant the compressed air A in the main chamber 1 becomes greater in pressure than the gaseous fuel pressure in the auxiliary chamber 2, the consequent compressed air A in the main chamber 1 presses down the slide valve 8 against the elastic force of the spring 37 as shown in FIG. 3, thereby opening the air-discharge orifices 16, through which the compressed air A in the main chamber 1 enters the auxiliary chamber 2 via the flaring ingress 24 and the air passage 7 in the control valve 5. Since the air-discharge orifices 16 have the leads 42 sufficient to help ensure the satisfactory penetration of the compressed air A into the auxiliary chamber 2, the compressed air A issued from the main chamber 1 into the auxiliary chamber 2 flows against the inverted conical surface of the auxiliary chamber 2, reflecting upwards, and then flows from the upper area to lower area of the auxiliary chamber 2. As a result, the compressed air A charged into the upper area of the auxiliary chamber 2 presses down the gaseous fuel G towards the lower area of the auxiliary chamber 2.

That is, a little gaseous fuel G in the auxiliary chamber 2 may get mixed with a part of the compressed air A entering into the auxiliary chamber 2.
Nevertheless, most residual fuel G is pressed compressively down along the inverted conical wall surface 21 to the lower area of the auxiliary chamber 2 by the compressed air A piling up in the upper area in the auxiliary chamber 2. Near top dead center of the compression stroke where sufficient amount of the compressed air A is supplied to the auxiliary chamber 2, ignition or burning takes place at the boundary area between the gaseous fuel G and the compressed air A. Then, the gaseous fuel G in the auxiliary chamber 2 continues to be burned with the rapid increase of pressure in the auxiliary chamber 2. At this event, a cam 35 lifts the control valve 5 to open the connecting port 6, through which the burning mixture entraining any remaining unburned gaseous fuel then issues into the main chamber 1. Therefore, the gaseous fuel G may be entirely expelled out of the auxiliary chamber 2 into the main chamber 1 with no unburned gaseous fuel G left in the auxiliary chamber 2. The gaseous burning mixture including any unburned gaseous fuel issuing out of the auxiliary chamber 2 into the main chamber 1 jets out from the jet-stream guide 28 at the egress end of the connecting port 6 along the reentrant wall surface of the cavity 4 in the piston 15 into the main chamber 1, where the gaseous burning mixture is transitorily held, during which mixing is quickly promoted to cause the explosive combustion in which the secondary combustion is promoted in the main chamber 1. As it burns, high combustion gas pressure is created in the main chamber 1, which pushes the piston 15 downward. Then, the combustion may be completed within a short burning time with less generation of NOx, HC.

On exhaust stroke starting after the piston 15 has reached bottom dead center thereof, the exhaust valve 57 has opened the exhaust ports 39 through which the exhaust gases are expelled out of an exhaust line, which has incorporated with, for example, a turbocharger, energy regenerative turbine, heat exchanger or the like to recover waste heat energy from the exhaust gases.

On the phases of exhaust and intake, the control valve 5 returns by the elastic force of a return spring 58 to its home position to close the connecting port 6. Then, the gaseous fuel valve 11 reopens the gaseous fuel-discharge port 17 to feed the gaseous fuel G from the gaseous fuel source to the auxiliary chamber 2.

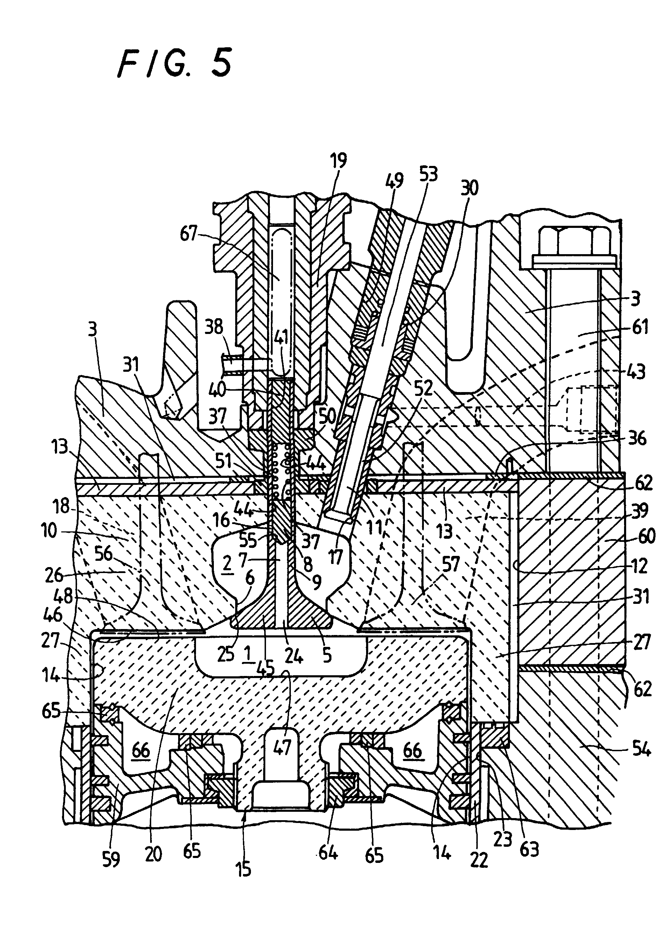

Next, another embodiment of the present invention will be explained with reference to FIGS. 5 to 7. Compared with the first embodiment as described just above, this second embodiment is substantially identical with the first embodiment, with the exception of the structures of the auxiliary chamber 2, air-discharge orifices 16 and piston 15. To that extent, like reference numerals designate identical or corresponding parts and the previous description is applicable.

In this second embodiment, a spacer block 60 is interposed between the cylinder block 54 and the cylinder head 3 with gaskets 62 arranged between their confronting surfaces and they are fixed together by bolts 61. The combustion chamber wall 10 is arranged in a recess 12 in the spacer block 60 constituting a part of the cylinder head 3. A gasket 63 is fitted between the combustion chamber wall 10 and the cylinder block 54. The air intake port 18 is formed in a spiral pattern to achieve an air swirl S in the main chamber 1. Moreover, the valve stem 9 of the control valve 5 is provided with a hollow space 67 to which coolant oil is supplied through a path 38 to cool down the control valve 5.

The combustion chamber wall 10 is arranged in the recess 12 of the spacer block 60 through gaskets 13, 36 in such a manner that heat-insulating air layers 31 are defined between the peripheral surface of the combustion chamber wall 10 and the recess 12 of the spacer block 60, thereby providing the thermal-isolating structure for the main and auxiliary chambers 1, 2. The piston 15 comprises the piston head 20 and the piston skirt 59, which are attached to each other with a coupling ring 64 by means of metal fusion so as to provide a heat-insulating air space 64 confined by gaskets 65 between the piston head 20 and the piston skirt 59. The main chamber 1 is a spatial area defined with a lower surface 46 of the head lower portion 26 in the combustion chamber wall 10, the hollow cylinder 14 including the cylinder liner 22 and the liner upper portion 27 in the combustion chamber wall 10, the top surface 48 of the piston head 20, and the cavity 47 formed in the top surface 48.

The slide valve 8 is provided therein with the air passage 7 having air-discharge orifices 16, which may open under the pressure of air in the main chamber 1 above the preselected pressure level. The air-discharge orifices 16, likewise with the first embodiment described above, are positioned at regular intervals around the air passage 7 to ensure the uniform spraying of the compressed air from the main chamber 1 into the auxiliary chamber 2.

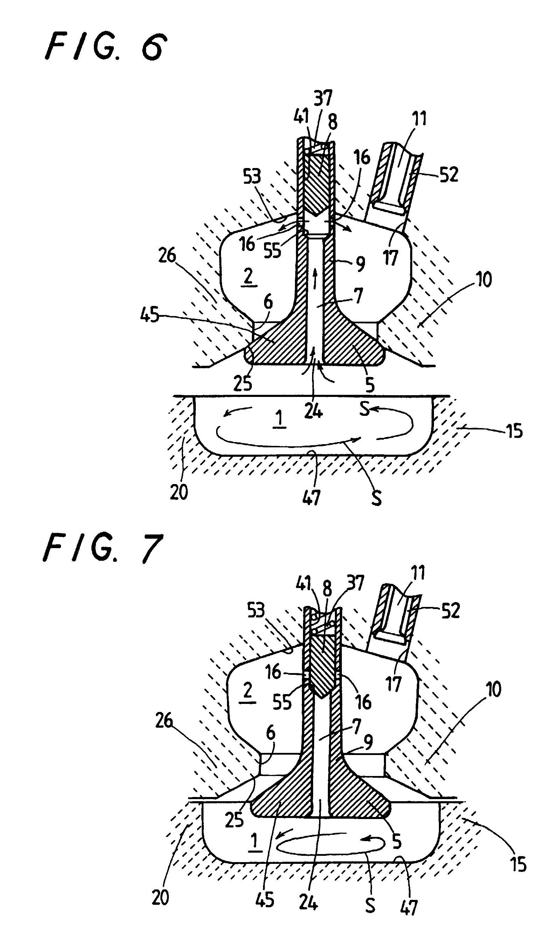

Near top dead center of the compression stroke according to the second embodiment, the slide valve 8, as shown in FIG. 6, lifts by the compressed air pressure in the main chamber 1 against the elastic force of the spring 37 thereby opening the air-discharge orifices 16. Then, the compressed air in the main chamber 1 enters the upper area in the auxiliary chamber 2 in an uniformly divergent manner past the air passage 7 and the air-discharge orifices 16, thereby getting mixed with the gaseous fuel in the auxiliary chamber 2 to produce the rich mixture at the upper area in the auxiliary chamber 2. Subsequently, when the pressure rising gradually in the auxiliary chamber 2 reaches about 5 MPa at which the air is heated by compressed pressure up to a temperature higher than the "auto-ignition" temperature of the fuel, the combustion takes place in the auxiliary chamber 2. As the gaseous fuel in the auxiliary chamber 2 continues to be burned with the rapid increase of pressure in the auxiliary chamber 2, the control valve 5 is forced downwards, as shown in FIG. 7, thereby opening the connecting port 6. At this event, the burning mixture entraining any remaining unburned gaseous fuel issues into the main chamber 1 from the lower area in the auxiliary chamber 2 through the connecting port 6.

In this second embodiment, the cavity 47 in the piston head 20 is made larger in diameter, compared with the cross section at the connecting port 6, and the intake air admitted into the main chamber 1 through the intake air port 18 produces the swirl S in the main chamber 1. As a result, the swirl S causes a divergent air flow in the main chamber 1 to thereby promote more rapid mixing of the air with gases including flames and unburned mixture, which are drawn in the swirl S in the main chamber 1, trapping no residual gaseous fuel in the auxiliary chamber, through the connecting port 6 opened when the control valve 5 moves off as shown in FIG. 7. This accelerates the secondary combustion in the main chamber 1 so that the combustion may be completed within a short burning time to ensure the high thermal efficiency with less generation of NOx, HC, soot and the like.

While there has been described what is at present considered to be the preferred embodiments of the invention, it will be understood that various modifications may be made therein, and it is intended to cover in the appended claims all such modifications as fall within the true scope of the invention.

## Claims

1. A prechamber gas-combustion engine comprising combustion chamber members(10) arranged in a cylinder head(3) and formed with auxiliary chambers(2), pistons (15) movable reciprocally in cylinders(14) formed in a cylinder block(54) mounted to the cylinder head(3), main chambers(1) formed in the pistons(15), connecting ports(6) formed in the combustion chamber members(10) to communicate the auxiliary chambers(2) with the main chambers(2), control valves(5) each arranged extending a central area of the associated auxiliary chamber(2) to open and close the associated connecting port(6), and gaseous fuel-supply means(11) for applying a gaseous fuel to the auxiliary chambers(2), the control valves(5) each having a valve stem(9) bored with an air passage(7) that is opened at its end exposed to the associated main chamber(1) and provided with air-discharge orifices(24) to open the air passage(7) to an upper area in the associated auxiliary chamber(2), and a slide valve(8) arranged in the air passage(7) in the valve stem(9).

2. The prechamber gas-combustion engine constructed as defined in claim 1, wherein the auxiliary chambers(2) each are of an inverted frustum of circular cone, in which a surrounding wall(21) of the auxiliary chamber(2) is formed in an inverted conical configuration having an upper area larger in diameter than an lower area nearby the connecting port (6).

3. The prechamber gas-combustion engine constructed as defined in claim 1, wherein an air issuing into the auxiliary chambers(2) past the air passages(7) and air-discharge orifices(16) from the main chambers(1) flows against the inverted conical walls(21) in the auxiliary chambers(2), reflecting upwards to the upper areas so that the air is charged from above in the auxiliary chambers(2), whereby the gaseous fuel in the auxiliary chambers(2) is pushed down to the lower areas of the auxiliary chambers(2).

4. The prechamber gas-combustion engine constructed as defined in claim 1, wherein the slide valves(8) each are urged under an elastic force of a spring(37) in the air passage(7) in the associated valve stem(9) to the closure of the associated air-discharge orifices(16) and operated to open the air-discharge orifices(16) against the elastic force of the spring(37) when subjected to an air pressure above a preselected pressure in the main chamber (1).

5. The prechamber gas-combustion engine constructed as defined in claim 1, wherein the air passages(7) are each shaped like funnel wide at a mouth (33) nearby the main chamber(1) for easy, smooth admission of compressed air into the air passage from the main chamber(1).

6. The prechamber gas-combustion engine constructed as defined in claim 1, wherein, the instant the control valves(5) each open the associated connecting port(6), most burning gaseous fuel compressively confined in the lower area of the auxiliary chamber(2) issues into the main chamber(1).

7. The prechamber gas-combustion engine constructed as defined in claim 1, wherein the main chambers(1) provided in the pistons(15) are each formed in a reentrant configuration in which an opening (33) thereof is narrowed with a tapered lip and an inner side wall(32) thereof is designed to be continued with a jet-stream guide(28) surface around an egress area of the connecting port(6) at top dead center of piston(15).

8. The prechamber gas-combustion engine constructed as defined in claim 7 wherein, as the control valves(5) open the connecting ports(6), gases of flames and any unburned gaseous fuel issue along the jet-stream guide(28) surfaces into the reentrant main chambers(1), where the gases collide against the inner side walls, thereby diverging and staying transitorily, during which combustion is promoted.

9. The prechamber gas-combustion engine constructed as defined in claim 1, wherein the valve stems(9) are each made thicker in diameter at an area where the air-discharge orifices(16) are formed, compared with the remaining area of the valve stem(9), thereby making leads(42) for the orifices long, in order to render a great penetration to the air introduced into the auxiliary chambers(2) out of the air-discharge orifices(16) past the air passages(7).

10. The prechamber gas-combustion engine constructed as defined in claim 1, wherein the valve stems(9) each have the air-discharge orifices(16) that are positioned at circumferentially regular intervals thereby making it possible to introduce uniformly the compressed air from the main chamber(1) into the auxiliary chamber(2), and the air issued into the auxiliary chamber(2) flows against the inverted conical surface(21) of the auxiliary chamber(2), reflecting upwards to the upper area of the auxiliary chamber(2).

11. The prechamber gas-combustion engine constructed as defined in claim 1, wherein near top dead center of the compression stroke, the compressed air in the main chambers(1) lifts the slide valves(8) to thereby open the air-discharge orifices(16) against the elastic forces of the springs(37), issuing uniformly into the upper areas in the auxiliary chambers(2) past the air passages(7) and the air-discharge orifices(16), thereby getting mixed with the gaseous fuel in the auxiliary chambers(2), where the combustion takes place, then, the control valves(5) open the connecting ports(6), through which the burning gases accompanied with any remaining unburned gaseous fuel issues into the main chambers(1) into the main chambers(1).

12. The prechamber gas-combustion engine constructed as defined in claim 1, including air intake ports (18) extending through the cylinder head(3) and the combustion chamber members(10) and installing therein intake valves(56), and exhaust ports(39) extending through the cylinder head(3) and the combustion chamber members(10) and installing therein exhaust valves(57).
